# DEMANDE DE BREVET EUROPEEN

(11) **EP 1 176 819 A1**
(43) Date de publication de la demande: **30.01.2002**
(21) Numéro de dépôt: 01401734.7
(22) Date de dépôt: 28.06.2001
(51) Int. Cl.: H04N 5/76, H04N 7/26, H04N 5/44

(54) **Procédé de sauvegarde d'un message dans un décodeur de télévision et son décodeur associé**

(30) Priorité: 28.07.2000 FR 0010010
(71) Demandeur: SAGEM S.A., 75015 Paris (FR)
(72) Inventeur: Cummings, John, 78600 Maisons-Laffitte (FR); Sagot, Didier, 95520 Osny (FR)
(74) Mandataire: Schmit, Christian Norbert Marie

(57) **Abrégé**

Pour permettre à un décodeur (1) de télévision de sauvegarder un plus grand nombre de messages dans une mémoire (13) de sauvegarde, un message étant reçu dans un format compressé de type MPEG 2 avec un premier taux de compression, on compresse alors un message reçu avec un deuxième taux de compression plus grand que le premier taux de compression.

## Description

La présente invention a pour objet un procédé de sauvegarde d'un message dans un décodeur de télévision. Elle a aussi pour objet un décodeur associé. Elle s'applique au domaine des décodeurs de télévisions, Le but de l'invention est de permettre de gérer une sauvegarde de messages en provenance notamment d'un serveur vidéo afin d'optimiser une utilisation de l'espace mémoire dans une mémoire de sauvegarde de ce décodeur de télévision.

Aujourd'hui, avec le développement des technologies de l'information et afin de répondre à une demande toujours croissante, une quantité d'informations disponible a considérablement augmentée. En conséquence, un utilisateur se trouve généralement confronté à des problèmes de choix quant à un programme à sélectionner et/ou à visualiser. Ainsi, un développement des décodeurs de télévisions a permis de remédier à ces problèmes en proposant des décodeurs de télévisions avec une mémoire de sauvegarde. Ainsi, l'utilisateur peut regarder un programme et en enregistrant un autre ou alors il peut enregistrer un programme qui est diffusé à des heures où il est dans l'incapacité de le visualiser.

Un programme émis par un opérateur, chargé de la gestion du serveur, est généralement compressé avant d'être émis. Un taux de compression utilisé par l'opérateur est variable en fonction du message diffusé. Par exemple, une rencontre de football est moins statique que le journal télévisé. Ainsi, l'opérateur ou encore diffuseur choisit le débit et le taux de compression pour chaque message émis.

Cependant, les taux de compressions choisis sont généralement supérieurs à un taux de compression optimum et ce afin de réaliser un compromis entre quantité d'informations transmises et qualité visuelle du message transmis. Toutefois, ce compromis n'existe que pour répondre et à des contraintes économiques et à des contraintes techniques. Cela aboutit à des messages qui occupent un espace mémoire pouvant être de l'ordre de 3 GigaOctets. Or, une capacité d'un disque dans un décodeur de télévision est de l'ordre d'une dizaine de GigaOctets pour des raisons de coûts principalement. Ce qui revient à dire que seulement trois ou quatre messages peuvent être sauvegardés dans cette mémoire de sauvegarde.

L'invention a pour objet de remédier à ce problème en proposant un procédé permettant d'augmenter un nombre de messages sauvegardés dans la mémoire de sauvegarde et ce en optimisant un enregistrement de tels messages reçus.

L'invention concerne donc un procédé de sauvegarde d'un message présent dans un flux de télévision reçu dans un décodeur de télévision avec lequel :
- on reçoit un message dans un flux de télévision compressé avec un premier taux de compression,
caractérisé en ce que :
- on compresse le message dans le décodeur avec un deuxième taux, variable selon un paramétrage d'un utilisateur, de compression plus élevé que le premier taux de compression,
- on sauvegarde le message compressé avec le deuxième taux de compression dans une mémoire de sauvegarde.

Elle concerne aussi un décodeur de télévision recevant un message dans un flux de télévision compressé avec un premier taux de compression caractérisé en ce qu'il comporte un moyen de compression de ce message, avant sauvegarde dans une mémoire de sauvegarde, avec un deuxième taux de compression plus élevé, et variable selon un paramétrage d'un utilisateur, que le premier taux de compression.

La présente invention sera mieux comprise à la lecture de la description qui suit et à l'examen de la figure qu'il accompagne. Celle-ci n'est présentée qu'à titre indicatif et nullement limitatif de l'invention. La figure montre :

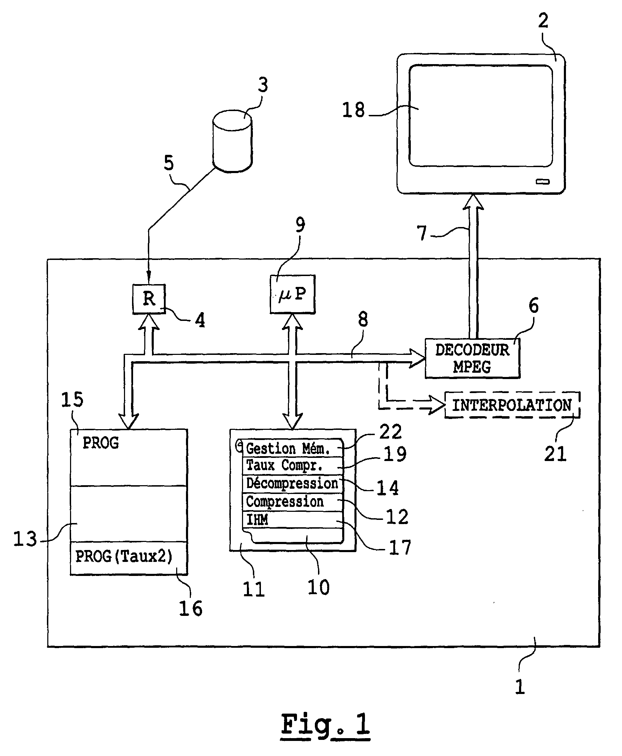

- Figure 1 : Une architecture simplifiée d'un décodeur selon l'invention permettant de mettre en oeuvre le procédé de l'invention.

La figure 1 montre un décodeur 1 selon l'invention reliée d'une part à un téléviseur 2 et d'autre part à un serveur 3 de messages fournis par un opérateur ou diffuseur. Pour cela, le décodeur 1 comporte un récepteur 4 relié au serveur 3 par l'intermédiaire d'une liaison 5 de type coaxial par exemple. Le décodeur 1 de télévision comporte aussi un décodeur 6 relié au téléviseur 2 par l'intermédiaire d'une liaison 7 de type Peritel. La fonction principale du décodeur 6 est de transcoder un format relatif à un message reçu par le récepteur 4 dans un format compréhensible par le téléviseur 2. Le décodeur 6 est apte à lire des messages compressés selon différent taux de compression. Généralement, un message émis par le serveur 3 est compressé selon un format selon la norme MPEG 2. Le récepteur 4 et le décodeur 6 sont reliés par un bus 8 de commandes, d'adresses et de données, le décodeur 1 est en outre géré par un microprocesseur 9 commandé par un programme 10 dans une mémoire 11 de programme. Ce programme 10 peut être vu comme le système d'exploitation du décodeur 1, c'est à dire le programme qui contrôle les fonctions principales et qui permet la mise en oeuvre de différentes applications. Par soucis de simplicité de l'exposé, les différents messages que le diffuseur peut émettre à travers la liaison 5 ont tous été regroupés dans le serveur 3. Ainsi, les messages peuvent être des films sauvegardés dans une base de donnée, ou encore des reportages, ou même des informations émises en directe tel que le journal télévisé. En conséquence, on considérera par la suite que tous les messages émis par le diffuseur proviennent de manière simplifiée du serveur 3.

Ainsi, le décodeur 1 reçoit, dans un flux de télévision, un message compressé avec un premier taux de compression. Le format de compression généralement utilisé est le format MPEG 2. Le premier taux de compression est choisi par le diffuseur en fonction du type de programme, c'est à dire en fonction d'une rapidité des mouvements de la séquence visuelle associée à ce message.

Dans l'invention, le décodeur 1 comporte un moyen 12 de compression du message reçu que l'on souhaite sauvegarder dans une mémoire 13 de sauvegarde. Pour cela, on met en oeuvre le procédé de l'invention. Ainsi, selon une mise en oeuvre préférée de l'invention, on décompresse le message reçu avec le premier taux de compression à l'aide notamment d'un moyen 14 de décompression. Ce moyen 14 se présente, dans un exemple préféré, sous une forme logiciel c'est à dire sous forme d'un programme 14 dans la mémoire 11. Un contenu du message décompressé est sauvegardé dans une mémoire temporaire par exemple un emplacement 15 dans la mémoire 13. Des lors on peut activer une phase de compression à l'aide du moyen 12 se présentant lui aussi, dans un exemple préféré, sous forme d'un programme 12 de la mémoire 11. Un résultat de la compression du message par le moyen 12 est sauvegardé à un emplacement 16 de la mémoire 13. Selon une caractéristique essentielle de l'invention, une valeur du deuxième taux de compression est plus élevée qu'une valeur du premier taux de compression. Il s'ensuit qu'une zone mémoire occupée par le message compressé avec le deuxième taux de compression est plus faible que une zone mémoire occupée par le message compressé avec le premier taux de compression. En outre, la zone 15 servant de mémoire temporaire pourra dans un exemple préféré être utilisé comme mémoire circulaire et pourra donc accueillir le message reçu décompressé. Ceci afin de diminuer une occupation dans la mémoire 13 de la zone 15.

Cependant, selon une réalisation préférée, le procédé de l'invention n'est pas mis en oeuvre automatiquement. Ainsi, la mémoire 11 est muni d'un programme 17 d'interface homme machine ou IHM 17 permettant d'afficher sur l'écran 18 de télévision du téléviseur 2 un jeu de menus et sous menu permettant notamment d'activer ou non le procédé de l'invention. En outre, selon une variante préférée de l'invention, on règle à la demande une valeur du deuxième taux de compression. Pour cela, on utilise l'IHM 17 afin d'offrir à un utilisateur un choix de paramètres à régler afin d'aboutir à un taux de compression optimum par rapport au choix effectué. Un résultat du choix, effectué quant aux valeurs des paramètres proposés par l'IHM 17, est envoyé pour traitement à un moyen 19 de calcul de taux de compression tel qu'un programme 19. Ce programme 19 est mémorisé dans la mémoire 11 de programme. Les paramètres fournis par l'IHM 17 sont, dans un exemple, la qualité de la compression, la couleur d'une image et la durée du message reçu. Le paramètre relatif à la qualité peut, dans cet exemple, être associé à trois valeurs : un pour une compression lente, deux pour une compression moyenne et trois pour une compression rapide. Ces valeurs sont donc relatives à une durée de la compression avec le deuxième taux. Plus la compression est rapide et plus le taux de compression est faible. Ainsi, il suffit d'associer une valeur donnée du deuxième taux de compression avec une valeur du paramètre qualité. Chaque valeur possible du deuxième taux de compression correspond à un taux de compression permettant de satisfaire le critère relatif à la valeur du paramètre choisi, par exemple une qualité moyenne de compression. Un deuxième paramètre peut être relatif à la couleur c'est à dire que l'on propose par exemple deux valeurs. Une première valeur indique que le message est en couleur et une deuxième valeur indique que le message est en noir et blanc ou peut être visualisé en noir et blanc. En effet, une image en noir et blanc peut être compressé, à niveau de qualité égale avec un taux de compression plus élevé que pour une image en couleur.

On envisage aussi de donner le choix entre un ou plusieurs mode de compression. Chaque mode de compression ayant un taux de compression identique, mais la mise en oeuvre de plusieurs de ces modes simultanément apporte un taux de compression plus élevé. Chaque mode a aussi une influence sur l'image qui sera restituée, l'utilisateur est alors libre de choisir, l'expérience aidant, le mode de compression qu'il préfère. Parmi le mode possible, on cite: la réduction par gestion des priorités, la réduction par modification du facteur de quantification, et la réduction par zone de l'images. Ces trois modes sont détaillés dans le document "Data selection strategies for digital VCR long play mode" par Jill M. Boyce pour Hitachi America Advanced Television & Systems Laboratory.

Cependant, Il peut arriver qu'un espace disponible dans la mémoire 13 soit inférieur à une zone qu'occupera un message reçu compressé avec le deuxième taux de compression suite au choix de valeur de paramètres de l'utilisateur. Dans une variante de l'invention, le moyen 19 tient compte d'un espace disponible et dégrade une valeur du deuxième taux de compression en fonction de l'espace mémoire disponible dans la mémoire 13. Par exemple, le moyen 19 auquel on fournit comme valeur de paramètre une valeur 3 pour la qualité, une valeur 2 pour la durée et une valeur 1 pour la couleur, aboutissant à un dépassement de la capacité disponible, déterminera quel est le taux de compression minimum qu'il faudra utiliser pour ce message. Ensuite, le moyen 19 recherchera la meilleure configuration de paramètres possible permettant de respecter ce minimum du taux de compression et proposera à l'utilisateur cette nouvelle configuration qu'il sera libre d'accepter ou non. En cas de refus, le message ne sera pas sauvegardé dans la mémoire 13.

Cependant, le décodeur 1 comporte dans une variante un moyen 22 de gestion d'un encombrement de la mémoire 13 tel qu'un programme 22 dans la mémoire 11. Dans un exemple de mise en oeuvre du moyen 22, ce dernier permet de libérer un espace mémoire supplémentaire en éliminant les messages par ordre d'ancienneté décroissante alors il sera possible d'enregistrer le message reçu compressé avec le deuxième taux de compression dès que l'espace sera suffisant. Il pourrait aussi les éliminer en partant du moins utilisé au plus utilisé. Le moyen 22 utilise comme algorithme un de ceux déjà largement connu et permettant la gestion de listes.

Dans une variante préférée de mise en oeuvre du procédé de l'invention, on active une opération de compression avec le deuxième taux pendant une phase d'inactivité du décodeur 1. Une phase d'inactivité est par exemple une phase de veille. En effet, une opération de compression demande une durée de traitement qui peut aller au-delà d'une dizaine d'heures et utilise une partie importante des ressources du décodeur 1. En effet, pendant une phase de veille le microprocesseur 9 n'a aucune donnée à traiter et peut donc être entièrement dédié à l'opération de compression commandée par le moyen 12. En outre, les moyens 12 et 14 peuvent prendre la forme d'un circuit intégré 12 et d'un circuit intégré 14 dédiés aux fonctions de compressions et décompression respectivement.

Dans une variante de l'invention, le format de compression utilisé est un format propriétaire c'est à dire qu'il ne s'agit pas du format de compression MPEG 2. Cette étape de compression peut être réalisée en surplus de la compression MPEG 2 avec le deuxième taux de compression ou à la place de cette dernière. En outre, le décodeur 1 comporte un moyen 21 de décompression d'un message compressé au format propriétaire, ce moyen 21 assurant en faite une fonction de transcodage du format propriétaire vers le format MPEG 2 seul format utilisable par le décodeur 6. De manière préférée cette compression selon le format propriétaire sera réalisée en surplus d'une compression selon le format MPEG 2 avec le deuxième taux de compression. Ainsi, le moyen 21 n'a plus à assurer une fonction de transcodage qui peut être beaucoup plus longue qu'une simple fonction de décompression. Ce moyen 21 prend, de manière préférée, la forme d'un circuit intégré dédié à cette fonction. Dans tous les cas, ce moyen 21 assurera une fonction d'interpolation spatiale ou temporelle afin de permettre une amélioration de la qualité de l'image. Ceci permet de compenser la dégradation supplémentaire subie lors de la compression avec le deuxième taux de compression de valeur plus élevée que celle du premier taux. Ainsi, les données à traiter sont envoyées en premier lieu au moyen 21. Dans un second temps, les données produites par le moyens 21 sont envoyées au décodeur 6 qui se charge de les transformer sous une forme compréhensible par le téléviseur 2.

## Revendications

1. Procédé de sauvegarde d'un message présent dans un flux de télévision reçu dans un décodeur (1) de télévision avec lequel :
- on reçoit un message dans un flux de télévision compressé avec un premier taux de compression,
**caractérisé en ce que** :
- on compresse le message dans le décodeur avec un deuxième taux, variable selon un paramétrage d'un utilisateur, de compression plus élevé que le premier taux de compression,
- on sauvegarde le message compressé avec le deuxième taux de compression dans une mémoire (13) de sauvegarde.

2. Procédé de sauvegarde selon la revendication 1 **caractérisé en ce que** :
- on décompresse ce message dans le décodeur.

3. Procédé de sauvegarde selon l'une des revendications 1 ou 2 **caractérisé en ce que** :
- on règle à la demande une valeur du deuxième taux de compression.

4. Procédé de sauvegarde selon l'une des revendications 1 à 3 **caractérisé en ce que** :
- on dégrade une valeur du deuxième taux de compression en fonction de l'espace mémoire disponible dans la mémoire de sauvegarde.

5. Procédé de sauvegarde selon l'une des revendications 1 à 4 **caractérisé en ce que** :
- on contrôle un encombrement de la mémoire de sauvegarde à l'aide d'un moyen (22) de gestion.

6. Procédé de sauvegarde selon l'une des revendications 1 à 5 **caractérisé en ce que** :
- on active une opération de compression avec le deuxième taux pendant une phase d'inactivité du décodeur telle qu'une phase de veille.

7. Procédé de sauvegarde selon l'une des revendications 1 à 6 **caractérisé en ce que** :
- un format de compression est propriétaire.

8. Procédé de sauvegarde selon l'une des revendications 1 à 7 **caractérisé en ce que** :
- on réalise une interpolation afin d'améliorer une qualité d'image d'un message à afficher.

9. Décodeur (1) de télévision recevant un message dans un flux de télévision compressé avec un premier taux de compression **caractérisé en ce qu'**il comporte un moyen (12) de compression de ce message, avant sauvegarde dans une mémoire (13) de sauvegarde, avec un deuxième taux de compression plus élevé, et variable selon un paramétrage d'un utilisateur, que le premier taux de compression.

10. Décodeur selon la revendication 1 **caractérisé en ce qu'**il comporte un moyen (21) d'interpolation.
